# EUROPEAN PATENT SPECIFICATION

(11) **EP 1 340 361 B1**
(45) Date of publication and mention of the grant of the patent: **22.03.2006**
(21) Application number: 01997936.8
(22) Date of filing: 14.11.2001
(51) Int. Cl.: H04M 1/725, H04Q 7/32

(54) **MOBILE DEVICE, AUXILIARY RENDERING DEVICE AND ARRANGEMENT**
MOBILGERÄT, WIEDERGABEHILFSVORRICHTUNG UND ANLAGE
DISPOSITIF MOBILE, DISPOSITIF AUXILIAIRE DE RESTITUTION ET SYSTEME

(30) Priority: 21.11.2000 EP 00204134
(43) Date of publication of application: 03.09.2003
(73) Proprietor: Koninklijke Philips Electronics N.V., 5621 BA Eindhoven (NL)
(72) Inventor: LIN, Ming-Hung, NL-5656 AA Eindhoven (NL)
(74) Representative: Groenendaal, Antonius W. M.
(86) International application number: PCT/EP2001/013265
(87) International publication number: WO 2002/043359

(56) References cited:
- WO-A-99/39488
- GB-A- 2 346 767
- GB-A- 2 348 083
- US-A- 6 128 509
- "SPECIFICATION OF THE BLUETOOTH SYSTEM, PROFILES, VERSION 1.0 B, SERVICE DISCOVERY APPLICATION PROFILE" BLUETOOTH SPECIFICATION, vol. 2, 1 December 1999 (1999-12-01), pages 62-93, XP002176976
- HAARTSEN: "BLUETOOTH - THE UNIVERSAL RADIO INTERFACE FOR AD HOC, WIRELESS CONNECTIVITY" ERICSSON REVIEW, STOCKHOLM, SE, no. 3, 1998, pages 110-117, XP000783249 ISSN: 0014-0171

## Description

The invention relates to a mobile device comprising primary communication means for establishing a primary communication session via a transcoding proxy with a content server, and auxiliary communication means for establishing an auxiliary communication session with an auxiliary rendering device.

The invention further relates to an arrangement comprising such a mobile device and an auxiliary rendering device.

A mobile device according to the preamble is known from US 5,880,732. Mobile devices allow users to access information from a variety of sources at any time and at any place. Such devices, for example mobile phones using the Wireless Application Protocol, or palmtop computers, typically only have limited processing power and rendering capabilities. Due to portability considerations, the mobile device is typically made as thin as possible, i.e. low power consumption, compact, lightweight, and so on. Thus it is not possible to include many features in this thin device, e.g. high-resolution image, or requiring a specific plug-in program. To facilitate access to the rich content offered by various information services, a content transcoding process needs to be executed automatically on an intermediate transcoding proxy when the intended content contains something beyond the capability of the mobile device. The transcoding proxy server converts various types of contents into formats that are acceptable for a specific mobile device. This transcoding process typically involves actions such as adjusting the presentation so it will fit on the small screen on the mobile device, removing unnecessary elements such as audio for devices that have no sound capabilities, scaling graphics to an appropriate size, compressing data for transmission to the mobile device, converting from e.g. HTML to WML, and so on.

A benefit of using this architecture is the simplification of client devices and the ability of browsing universal content on the World-Wide Web. Most of the complicated tasks have been put on the transcoding proxy server or even further pushed to the content server. Meanwhile, another advantage of using this technology is the automatic content adaptation to various client devices and access network bandwidth.

However, the trend of developing mobile thin clients is to design smaller hand-held units. The small size of mobile thin client causes an associated display or speaker to be rather small. The small display or speaker make it difficult to adequately present the content to a user. To solve this problem, the above-mentioned US patent discloses an arrangement that enables the usage of an external display monitor with a mobile telephone. The mobile telephone transmits numeric and textual data intended to be displayed on a display to a remote display monitor, where it can be presented on the large screen of the remote display monitor. However, a disadvantage of this mobile device is that it only copies the same data to a large display monitor. This makes this mobile device less than optimal for use in the presentation of data other than text The data has been transcoded at the transcoding proxy to a format suitable for the mobile device, and this format is inherently limited to the capabilities of the mobile device. So, for instance, an image would be converted to black and white on a mobile device having only a black/white screen. This black and white image will then be transmitted by the mobile device for display on the remote display monitor. However, the remote display monitor will most likely have a color display. A similar problem exists with audio data, which is transcoded for presentation by the mobile device, yet presented by a device with more capabilities than the mobile device. GB-A-2348083 discloses a radio handset for browsing the internet. The handset communicates via a protocol gateway with a web server. The handset is connected to an accessory device comprising applications such as a camera application. If content is received that is associated with the accessory device, the handset transfers this content to the accessory device. When the accessory device is coupled to the handset, it informs the handset of the content type(s) it can handle.

It is an object of the invention to provide a mobile device according to the preamble, which can facilitate a better presentation of content than the known device.

This object is achieved according to the invention in a mobile device which is characterized in that the auxiliary communication means are arranged for receiving an assistance message from the auxiliary rendering device, the assistance message comprising information on the capabilities of the auxiliary rendering device, and for establishing the auxiliary communication session in response to the assistance message, and the primary communication means are arranged for transmitting said information on the capabilities to the transcoding proxy.

When the primary communication session is adapted in this fashion, the content received from the content server will be transcoded by the transcoding proxy for presentation on the auxiliary rendering device. The mobile device can to this end communicate information on the capabilities of the auxiliary rendering device to the transcoding proxy. Alternatively, the mobile device can comprise a number of profiles for auxiliary rendering devices, select the most appropriate one and transmit that to the transcoding proxy. The transcoding proxy could also contact the auxiliary rendering device itself to learn about its capabilities, either via the mobile device or via some other communication channel. In any case, once the transcoding proxy knows the capabilities of the auxiliary rendering device, it can transcode content for presentation on the auxiliary rendering device rather than for presentation on the mobile device. This allows a greater choice in devices on which to render the content and the formats in which this should be done.

The mobile device locates an auxiliary rendering device by means of the assistance message. This message comprises information on its capabilities, such as the presence of a display screen with resolution data, the capabilities of a speaker, and so on. The mobile device relays this information to the transcoding proxy which can then transcode the information into a format suitable for rendering on the auxiliary rendering device or into a format suitable for rendering on the mobile device.

An embodiment is characterized by rendering means for rendering content received in the primary communication session, and rendering control means for examining the content to determine if the content can be rendered by the rendering means, for redirecting the content to the rendering means if this is the case and for redirecting the content to the auxiliary communication means otherwise, whereby the auxiliary communication means are arranged for transmitting the content via the auxiliary communication session for rendering by the auxiliary rendering device. The transcoding proxy can, in accordance with the information on the capabilities of the auxiliary rendering device, transcode the content in the most appropriate fashion. If an auxiliary communication session has been established with an auxiliary rendering device that comprises a color display, and the mobile device comprises a black and white display, the transcoding proxy may choose to transcode a source image to a color image rather than a black and white image, and then transmit the transcoded image to the mobile device. The rendering control means in the mobile device will examine the received image, determine that it is a color image and relay it to the auxiliary rendering device. This facilitates an optimal presentation of the image.

A further embodiment is characterized in that the auxiliary communication means are arranged for transmitting an assistance request to at least one auxiliary rendering device. An advantage of this embodiment is that this allows the mobile device to actively locate an auxiliary rendering device. Auxiliary rendering devices can respond to the assistance request with their respective assistance messages, allowing the mobile device to select the most appropriate one. The assistance request is preferably broadcast in a wireless fashion so that all auxiliary rendering devices in the vicinity can receive it.

A variant of this embodiment is characterized in that the primary communication means are arranged for receiving a communication request for establishing the primary communication session, and the auxiliary communication means are arranged for transmitting the assistance request in response to the primary communication means receiving the communication request. An advantage of this variant is that it facilitates server-initiated communication sessions. The content server can send a communication request, typically via the transcoding proxy, to the mobile device to establish a communication session. The mobile device can then locate an auxiliary rendering device for use in that communication session.

A further variant of this embodiment is characterized in that the auxiliary communication means are arranged for transmitting the assistance request when a level for the quality of a previously established auxiliary communication session drops below a predetermined value. The mobile device can also use the assistance request to locate a new auxiliary rendering device. This allows it to establish an auxiliary communication session with the new auxiliary rendering device, for instance if the auxiliary rendering device that was previously in use has gone out of range.

A further embodiment is characterized in that the auxiliary communication means are arranged for ending the auxiliary communication session and establishing a further auxiliary communication session in response to receiving a further assistance message from a further auxiliary rendering device, said further assistance message comprising information on the capabilities of the further auxiliary rendering device, and in that the primary communication means are arranged for transmitting said information on the capabilities to the transcoding proxy in response to receiving the further assistance message. When the mobile device receives such a further assistance message, for instance in response to transmitting an assistance request when the level of the previously established auxiliary communication session drops below a predetermined value, it can start using the new auxiliary rendering device instead. This makes it possible for a user to walk around between multiple auxiliary rendering devices, for example display screens in a building, without having to wait until the primary communication session has ended. The effect will be that the rendering of the content simply continues on the auxiliary rendering device he is closest to.

The invention further provides an arrangement comprising a mobile device and an auxiliary rendering device

These and other aspects of the invention will be apparent from and elucidated with reference to the embodiments shown in the drawings, in which:
Figure 1 schematically shows a communication network arranged for a communication session between a mobile device and a content server;
Figure 2 schematically shows the mobile device in more detail; and
Figure 3 schematically shows a handover process.

Throughout the figures, same reference numerals indicate similar or corresponding features. Some of the features indicated in the drawings are typically implemented in software, and as such represent software entities, such as software modules or objects.

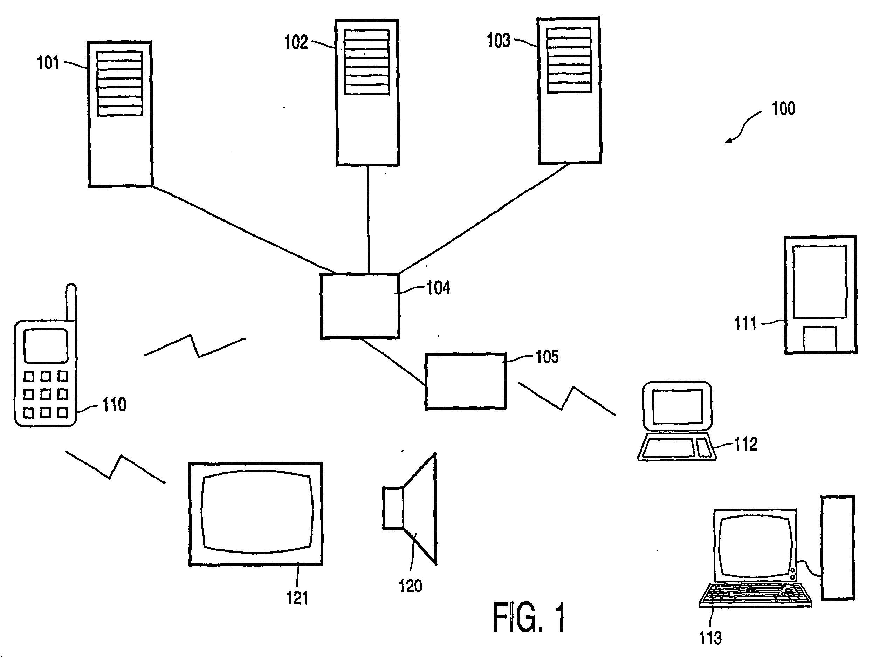

Figure 1 schematically shows a communication network 100 arranged for a communication session between a mobile device 110 and a content server 101. The content servers 101, 102, 103 can establish communication sessions with mobile devices 110, 111, 112, 113 via a transcoding proxy 104. Also present are auxiliary rendering devices 120,121, comprising auxiliary loudspeaker and display, respectively. Other auxiliary rendering devices can of course easily be substituted. To illustrate the working of the invention, it is assumed that a communication session is to be established between the mobile device 110 and the content server 101.

The communication session is typically an end-to-end communication session that may involve the exchange of Internet data packets. They can be divided into two types as follows:
1. Client-initiated access, which may trigger the execution of some application programs on the transcoding proxy, such as image transcoding, audio/video re-encoding, JAVA or WML script execution, and so on.
2. Network-initiated services, such as e-mail notification, Internet telephony, instant messaging, and so on.

The transcoding proxy 104 transcodes communication sessions established between the content server 101 and the mobile device 110 to and from a format suitable for the mobile device 110, to facilitate access to the content offered by the content server 101. The transcoding proxy 104 converts various types of contents into formats that are acceptable for the mobile device 104. This conversion typically involves actions such as adjusting the presentation so it will fit on the small screen on the mobile device 110, removing unnecessary elements such as audio for devices that have no sound capabilities, scaling graphics to an appropriate size, compressing data for transmission to the mobile device 104, converting from e.g. HTML to WML, and so on. Methods of transcoding communication sessions are known from e.g. US 6,049,821 or US 5,918,013. The transcoding proxy 104 may directly relay the transcoded content to the mobile device 110, or may need a gateway 105 to do so.

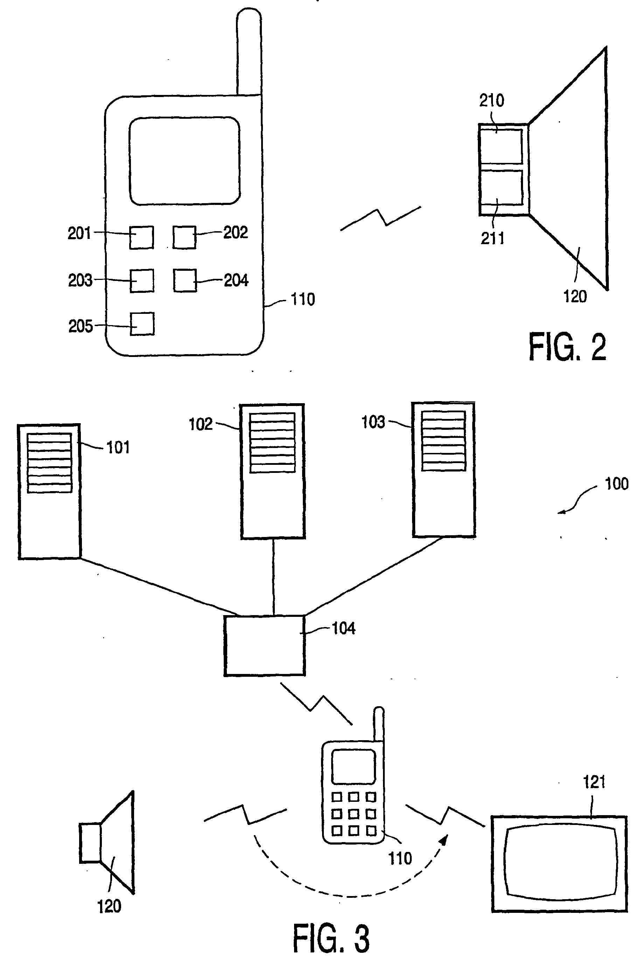

Figure 2 schematically shows the mobile device 110 in more detail. It comprises a primary communication module 201 for establishing a primary communication session via a transcoding proxy with a content server, and an auxiliary communication module 202 for establishing an auxiliary communication session with an auxiliary rendering device such as auxiliary rendering device 120.

The auxiliary communication module 202 receives an assistance message from the auxiliary rendering device 120. This assistance message comprises information on the capabilities of the auxiliary rendering device 120, such as the presence of a display screen with resolution data, the capabilities of a speaker, and so on.

The assistance message may be sent by the auxiliary rendering device 120 of its own accord, but preferably is sent in response to the transmission of an assistance request by the auxiliary communication module 202 to at least one auxiliary rendering device 120, 121. Auxiliary rendering devices 120, 121 can respond to the assistance request with their respective assistance messages, allowing the mobile device 110 to select the most appropriate one. The assistance request is preferably sent as a broadcast in a wireless fashion. The mobile device 110 may employ a timer which is set when the assistance request is transmitted. If the timer reaches a particular timeout value, and no assistance message has been received yet, the mobile device 110 can conclude no auxiliary rendering device 120 is available.

In response to receiving the assistance message, the auxiliary communication module 202 establishes an auxiliary communication session with the auxiliary rendering device 120. This auxiliary communication session allows the mobile device 110 to relay the content via the auxiliary communication session to the auxiliary rendering device 120 for rendering by the auxiliary rendering device 120.

After the assistance message has been received, the primary communication module 201 transmits the information on the capabilities to the transcoding proxy 104, which can then transcode the information into a format suitable for rendering on the auxiliary rendering device 120 or into a format suitable for rendering on the mobile device 110.

The primary communication module 201 can now establish a primary communication session with the content server 101. The auxiliary rendering device 120 can render content received in this session. The primary communication session can also be established in a server-initiated fashion. In that case, the primary communication module 201 receives a communication request for establishing the primary communication session from the content server 101. In response to that, the auxiliary communication module 202 transmits the assistance request to locate an appropriate auxiliary rendering device, if no auxiliary communication session has yet been established. Once the auxiliary communication session has been established, the primary communication module 201 relays the information on the capabilities of the auxiliary rendering device 120 to the transcoding proxy 104, and the primary communication session is established as above. The use of the timer as described above is particularly useful in this case, since the content server 101 may employ its own timer in waiting for the primary communication session to be established. If the mobile device 110 does not establish this session soon enough, the content server 101 will most likely give up.

The mobile device 110 further comprises a rendering module 203 which renders content received in the primary communication session. Rendering the content can be done in a variety of ways, for example by presenting it on a display, producing a sound using a loudspeaker, and so on. The rendering module 203 may employ a decoding module 204, which decodes the received content before it can be rendered. This could be, for instance, an MP3 decoder, or a conditional access module.

In accordance with the invention, the mobile device 110 further comprises a rendering control module 205 which examines the received content to determine if it can be rendered by the rendering module 203. If this is the case, it redirects the content to the rendering module 203. If not, it redirects the content to the auxiliary communication module 202. The auxiliary communication module 202 then transmits the content via the auxiliary communication session to the auxiliary rendering device 120 for rendering by the auxiliary rendering device 120.

The auxiliary rendering device 120 comprises a mobile device communication module 210 for establishing an auxiliary communication session with the mobile device 110. The mobile device communication module 210 transmits an assistance message comprising information on the capabilities of the auxiliary rendering device 120 to the mobile device 110, preferably in response to receiving an assistance request from the mobile device 110. It may also be transmitted periodically or because of some other factor. The mobile device 110 responds to receiving an assistance message by establishing the auxiliary communication session, if it judges the capabilities of the auxiliary rendering device 120 sufficient. If not, it needs not do anything. The auxiliary rendering device 120 should therefore not take any action if no results are forthcoming from the assistance message.

If the mobile device 104 receives multiple assistance messages, it can pick one depending on various factors. For instance, it may choose the assistance message from the geographically closest auxiliary rendering device, or the one that was received the soonest after transmitting the assistance request.

The auxiliary rendering device 120 further comprises a rendering module 211 for rendering content received in the auxiliary communication session. This rendering module 211 will typically have better rendering capabilities than the rendering module 203 in the mobile device 110. Once the mobile device 110 has established a primary communication session with the content server 101, it can relay content received therethrough via the auxiliary communication session to the auxiliary rendering device 120 for rendering by the auxiliary rendering device 120. The auxiliary rendering device 120 in Figure 2 is equipped with a loudspeaker, and so allows rendering of audio content, such as music or speech. This way, the mobile device 110 does not need to render this audio content on its own loudspeaker, which in the case of a mobile telephone gives a much lower rendering quality compared to a dedicated loudspeaker system. The mobile device 110 could similarly have used auxiliary rendering device 121, which comprises an auxiliary display that is bigger and has better resolution and color capabilities than the display on the mobile device 110. The mobile device 110 can now let the auxiliary rendering device 121 render visual content, such as images, text or movies, rather than render it itself on its own tiny display. Once the primary communication session has been ended, the mobile device 104 can similarly end the auxiliary communication session, since it no longer needs to use the auxiliary rendering device 120.

Figure 3 schematically shows a handover process involving the mobile device 110 and first and second auxiliary rendering devices 120, 121. It is assumed that a primary communication session has been established between content server 101 and mobile device 110 via transcoding proxy 104, and that an auxiliary communication session has been established between mobile device 104 and first auxiliary rendering device 120. As has become clear above, the mobile device 104 receives content from the content server 101 and either renders this itself, using rendering module 203, or forwards the content to auxiliary device 120 via the auxiliary communication session.

It may become necessary or desirable to stop using first auxiliary device 120 and to start using second auxiliary device 121 instead. For instance, the second auxiliary device 121 may have better rendering capabilities than the first auxiliary device 120, so switching to second auxiliary device 121 would be preferable for the user. Alternatively, a level for the quality of the established auxiliary communication session drops below a predetermined value, i.e., the auxiliary device 120 goes out of range or stops responding to transmissions for some reason. The mobile device 110 can detect this, for instance, by performing an RF level scan.

To switch to second auxiliary device 121, the mobile device 110 transmits an assistance request, as described above. Second auxiliary rendering device 121 will receive the assistance request, and will respond with an assistance message, comprising information on its capabilities. The mobile device 110 can use this message to determine if switching to the second auxiliary rendering device 121 is desirable. If so, the auxiliary communication module 202 ends the auxiliary communication session with the first auxiliary rendering device 120 and establishes a new auxiliary communication session with the second auxiliary rendering device 121. The primary communication module 201 then transmits said information on the capabilities to the transcoding proxy 104, so that the transcoding proxy 104 can start transcoding to a format suitable for the second auxiliary rendering device 121.

It may be useful to temporarily suspend the primary communication session before ending the auxiliary communication session, and to resume the primary communication session once the new auxiliary communication session has been established. This ensures that no content is transmitted while no suitable auxiliary rendering device is available.

The mobile device 110 will move around in the network. It may happen that it reaches the boundary of a so-called service area covering a particular geographical area or portion of the network. In that case, the mobile device 110 needs to perform a handover to an adjacent service area. International patent application WO 02/035790 (attorney docket PHTW000006) describes a method of transferring the primary communication session from one service area to another. Each service area is associated with a transcoding proxy for transcoding communication sessions established in said service area to and from a format suitable for the mobile device 110. When the mobile device 110 moves to the second service area, the associated second transcoding proxy is contacted and session handling and session information is transferred thereto. The transfer operation is transparent to the content server 101, so the session between mobile device 110 and content server 101 stays intact.

When the mobile device 110 detects a boundary of the service area, but there is no need to start using the second auxiliary rendering device 121, the above-mentioned method can be used without modification. It may be necessary for the mobile device 110 to send the information on the capabilities of the first auxiliary rendering device 120 to the second transcoding proxy associated with the second service area, if the session information that is transferred does not include this information on the capabilities.

It can be advantageous to simultaneously switch from one service area to another and from one auxiliary rendering device to another. In that case, the mobile device 104 should send the information on the capabilities of the second auxiliary rendering device 120 to the second transcoding proxy associated with the second service area during the handover process.

## Claims

1. A mobile device (110) comprising primary communication means (201) for establishing a primary communication session via a transcoding proxy (104) with a content server (101), auxiliary communication means (202) for establishing an auxiliary communication session with an auxiliary rendering device (120), and means for adapting the primary communication session to the capabilities of the auxiliary rendering device (120), **characterized in that** the auxiliary communication means (202) are arranged for receiving an assistance message from the auxiliary rendering device (120), the assistance message comprising information on the capabilities of the auxiliary rendering device (120), and for establishing the auxiliary communication session in response to the assistance message, and the primary communication means (201) are arranged for transmitting said information on the capabilities to the transcoding proxy (104).

2. A mobile device (110) as claimed in claim 1, **characterized by** rendering means (203) for rendering content received in the primary communication session, and rendering control means (205) for examining the content, to determine if the content can be rendered by the rendering means and for redirecting the content to the rendering means (203) if this is the case, or for redirecting the content to the auxiliary communication means (202) otherwise, whereby the auxiliary communication means (202) are arranged for transmitting the content via the auxiliary communication session for rendering by the auxiliary rendering device (120).

3. A mobile device (110) as claimed in claim 1, **characterized in that** the auxiliary communication means (202) are arranged for transmitting an assistance request to at least one auxiliary rendering device (120).

4. A mobile device (110) as claimed in claim 3, **characterized in that** the primary communication means (201) are arranged for receiving a communication request for establishing the primary communication session, and the auxiliary communication means (202) are arranged for transmitting the assistance request in response to the primary communication means (201) receiving the communication request.

5. A mobile device (110) as claimed in claim 3, **characterized in that** the auxiliary communication means (202) are arranged for transmitting the assistance request when a level for the quality of a previously established auxiliary communication session drops below a predetermined value.

6. A mobile device (110) as claimed in claim 1, **characterized in that** the auxiliary communication means (202) are arranged for ending the auxiliary communication session and establishing a further auxiliary communication session in response to receiving a further assistance message from a further auxiliary rendering device (121), said further assistance message comprising information on the capabilities of the further auxiliary rendering device (121), and **in that** the primary communication means (201) are arranged for transmitting said information on the capabilities of the furher auxiliary rendering device (121) to the transcoding proxy (104) in response to receiving the further assistance message.

7. An arrangement (100) comprising a mobile device (110) as claimed in any of the claims 1-6, and an auxiliary rendering device (120) comprising mobile device communication means (210) for establishing an auxiliary communication session with a mobile device (110), and rendering means (211) for rendering content received in the auxiliary communication session, the mobile device communication means (210) being arranged for transmitting an assistance message comprising information on the capabilities of the auxiliary rendering device (120) to the mobile device (110).

## Patentansprüche

1. Mobilgerät (110), umfassend primäre Kommunikationsmittel (201) zum Einrichten einer primären Kommunikationssitzung über einen Codeumwandlungs-Proxy (104) mit einem Inhalt-Server (101), Hilfskommunikationsmittel (202) zum Einrichten einer Hilfskommunikationssitzung mit einer Wiedergabehilfsvorrichtung (120) und Mittel zum Anpassen der primären Kommunikationssitzung an die Fähigkeiten der Wiedergabehilfsvorrichtung (120), **dadurch gekennzeichnet, dass** die Hilfskommunikationsmittel (202) zum Empfangen einer Hilfsnachricht von der Wiedergabehilfsvorrichtung (120), wobei die Hilfsnachricht Informationen über die Fähigkeiten der Wiedergabehilfsvorrichtung (120) umfasst, und zum Einrichten der Hilfskommunikationssitzung als Reaktion auf die Hilfsnachricht angeordnet sind und die primären Kommunikationsmittel (201) zum Übertragen der Informationen über die Fähigkeiten an den Codeumwandlungs-Proxy (104) angeordnet sind.

2. Mobilgerät (110) nach Anspruch 1, durch Wiedergabemittel (203) für eine Wiedergabe von Inhalt, welcher in der primären Kommunikationssitzung empfangen wurde, und durch Wiedergabesteuerungsmittel (205) für ein Untersuchen des Inhalts, um festzustellen, ob der Inhalt durch die Wiedergabemittel wiedergegeben werden kann, und für ein Weiterleiten des Inhalts an die Wiedergabemittel (203), falls dies der Fall ist, oder für ein Weiterleiten des Inhalts auf andere Weise an die Hilfskommunikationsmittel (202) **gekennzeichnet**, wodurch die Hilfskommunikationsmittel (202) zum Übertragen des Inhalts über die Hilfskommunikationssitzung für eine Wiedergabe durch die Wiedergabehilfsvorrichtung (120) angeordnet sind.

3. Mobilgerät (110) nach Anspruch 1, **dadurch gekennzeichnet, dass** die Hilfskommunikationsmittel (202) zum Übertragen einer Hilfsanforderung an mindestens eine Wiedergabehilfsvorrichtung (120) angeordnet sind.

4. Mobilgerät (110) nach Anspruch 3, **dadurch gekennzeichnet, dass** die primären Kommunikationsmittel (201) zum Empfangen einer Kommunikationsanforderung zum Einrichten der primären Kommunikationssitzung angeordnet sind und die Hilfskommunikationsmittel (202) zum Übertragen der Hilfsanforderung als Reaktion auf die primären Kommunikationsmittel (201) angeordnet sind, welche die Kommunikationsanforderung empfangen.

5. Mobilgerät (110) nach Anspruch 3, **dadurch gekennzeichnet, dass** die Hilfskommunikationsmittel (202) zum Übertragen der Hilfsanforderung angeordnet sind, wenn ein Qualitätspegel einer zuvor eingerichteten Hilfskommunikationssitzung unter einen vorbestimmten Wert fällt.

6. Mobilgerät (110) nach Anspruch 1, **dadurch gekennzeichnet, dass** die Hilfskommunikationsmittel (202) für ein Beenden der Hilfskommunikationssitzung und ein Einrichten einer weiteren Hilfskommunikationssitzung als Reaktion auf ein Empfangen einer weiteren Hilfsnachricht von einer weiteren Wiedergabehilfsvorrichtung (121) angeordnet sind, wobei die weitere Hilfsnachricht Informationen über die Fähigkeiten der weiteren Wiedergabehilfsvorrichtung (121) umfasst, und dass die primären Kommunikationsmittel (201) zum Übertragen der Informationen über die Fähigkeiten der weiteren Wiedergabehilfsvorrichtung (121) an den Codeumwandlungs-Proxy (104) als Reaktion auf ein Empfangen der weiteren Hilfsnachricht angeordnet sind.

7. Anlage (100), ein Mobilgerät (110) nach einem der Ansprüche 1 bis 6 und eine Wiedergabehilfsvorrichtung (120) umfassend, welche Mobilgerät-Kommunikationsmittel (210) zum Einrichten einer Hilfskommunikationssitzung mit einem Mobilgerät (110) und Wiedergabemittel (211) für eine Wiedergabe von Inhalt umfasst, welcher in der Hitfskommunikationssitzung empfangen wird, wobei die Mobilgerät-Kommunikationsmittel (210) für ein Übertragen einer Hilfsnachricht, welche Informationen über die Fähigkeiten der Wiedergabehilfsvorrichtung (120) umfasst, an das Mobilgerät (110) angeordnet sind.

## Revendications

1. Dispositif mobile (110) comprenant des moyens de communication principaux (201) destinés à établir une session de communication principale par le biais d'un mandataire de transcodage (104) avec un serveur de contenu (101), et des moyens de communication auxiliaires (202) destinés à établir une session de communication auxiliaire avec un dispositif de rendu auxiliaire (120), et des moyens destinés à adapter la session de communication principale aux capacités du dispositif de rendu auxiliaire (120), **caractérisé en ce que** les moyens de communication auxiliaires (202) sont prévus pour recevoir un message d'assistance provenant du dispositif de rendu auxiliaire (120), le message d'assistance comprenant des informations sur les capacités du dispositif de rendu auxiliaire (120), et pour établir la session de communication auxiliaire en réaction au message d'assistance, et les moyens de communication principaux (201) sont prévus pour transmettre lesdites informations sur les capacités au mandataire de transcodage (104).

2. Dispositif mobile (110) suivant la revendication 1, **caractérisé par** des moyens de rendu (203) destinés à assurer le rendu d'un contenu reçu lors de la session de communication principale, et des moyens de commande de rendu (205) destinés à examiner le contenu afin de déterminer si le contenu peut être rendu par les moyens de rendu, à rediriger le contenu vers les moyens de rendu (203) si tel est le cas, ou à rediriger le contenu vers les moyens de communication auxiliaires (202) dans le cas contraire, attendu que les moyens de communication auxiliaires (202) sont prévus pour transmettre le contenu par le biais de la session de communication auxiliaire en vue d'un rendu par le dispositif de rendu auxiliaire (120).

3. Dispositif mobile (110) suivant la revendication 1, **caractérisé en ce que** les moyens de communication auxiliaires (202) sont prévus pour transmettre une demande d'assistance à au moins un dispositif de rendu auxiliaire (120).

4. Dispositif mobile (110) suivant la revendication 3, **caractérisé en ce que** les moyens de communication principaux (201) sont prévus pour recevoir une demande de communication destinée à établir la session de communication principale, et les moyens de communication auxiliaires (202) sont prévus pour transmettre la demande d'assistance en réaction aux moyens de communication principaux (201) recevant la demande de communication.

5. Dispositif mobile (110) suivant la revendication 3, **caractérisé en ce que** les moyens de communication auxiliaires (202) sont prévus pour transmettre la demande d'assistance lorsqu'un niveau pour la qualité d'une session de communication auxiliaire établie auparavant tombe au-dessous d'une valeur prédéterminée.

6. Dispositif mobile (110) suivant la revendication 1, **caractérisé en ce que** les moyens de communication auxiliaires (202) sont prévus pour mettre fin à la session de communication auxiliaire et établir une session de communication auxiliaire supplémentaire en réaction à la réception d'un message d'assistance supplémentaire provenant d'un dispositif de rendu auxiliaire supplémentaire (121), ledit message d'assistance supplémentaire comprenant des informations sur les capacités du dispositif de rendu auxiliaire supplémentaire (121), et **en ce que** les moyens de communication principaux (201) sont prévus pour transmettre lesdites informations sur les capacités du dispositif de rendu auxiliaire supplémentaire (121) au mandataire de transcodage (104) en réaction à la réception du message d'assistance supplémentaire.

7. Agencement (100) comprenant un dispositif mobile (110) suivant l'une quelconque des revendications 1 à 6, et un dispositif de rendu auxiliaire (120) comprenant des moyens de communication de dispositif mobile (210) destinés à établir une session de communication auxiliaire avec un dispositif mobile (110), et des moyens de rendu (211) destinés à assurer le rendu d'un contenu reçu lors de la session de communication auxiliaire, les moyens de communication de dispositif mobile (210) étant prévus pour transmettre un message d'assistance comprenant des informations sur les capacités du dispositif de rendu auxiliaire (120) au dispositif mobile (110).
